# EUROPÄISCHE PATENTANMELDUNG

(11) **EP 2 006 540 A2**
(43) Veröffentlichungstag der Anmeldung: **24.12.2008**
(21) Anmeldenummer: 08010306.2
(22) Anmeldetag: 06.06.2008
(51) Int. Cl.: F04B 35/04, F04B 35/06, F16G 7/06

(54) **Kompressorvorrichtung mit einer Spanneinrichtung**

(30) Priorität: 19.06.2007 DE 102007027976
(71) Anmelder: Schneider Druckluft GmbH, 72770 Reutlingen (DE)
(72) Erfinder: Lodni, Marco, 72181 Trochtelfingen (DE); Strohn, Sigmund, 73663 Berglen (DE)
(74) Vertreter: Bregenzer, Michael

(57) **Zusammenfassung**

Die Erfindung betrifft eine Kompressorvorrichtung (10) zur Erzeugung von Druckluft für Druckluft-Werkzeuge, mit einer Verdichtereinrichtung (13) zum Verdichten der Druckluft und mit einem Antriebsmotor (14) zum Antreiben der Verdichtereinrichtung (13) über einen Antriebsriemen (37), der über Räder (38, 39) des Antriebsmotors (14) und der Verdichtereinrichtung (13) geführt ist, wobei der Antriebsmotor (14) und die Verdichtereinrichtung (13) zum Spannen des Antriebsriemens (37) relativ zueinander mittels eines Schwenkgelenks (43) um eine Schwenkachse (44) schwenkbar gelagert sind und bei einem Auseinanderschwenken des Antriebsmotors (14) und der Verdichtereinrichtung (13) ein Spreizwinkel (50) zwischen dem Antriebsmotor (14) und der Verdichtereinrichtung (13) vergrößert und der Antriebsriemen (37) gespannt wird. Bei der Kompressorvorrichtung (10) ist vorgesehen, dass sie eine Spanneinrichtung (40) mit einer Federanordnung (47) aufweist, die eine Gelenkarmanordnung (46) in Richtung der Schwenkachse (44) im Sinne eines Aufweitens des Spreizwinkels (50) und Spannens des Antriebsriemens (37) beaufschlagt.

## Beschreibung

Die Erfindung betrifft eine Kompressorvorrichtung zur Erzeugung von Druckluft für Druckluft-Werkzeuge, mit einer Verdichtereinrichtung zum Verdichten der Druckluft und mit einem Antriebsmotor zum Antreiben der Verdichtereinrichtung über einen Antriebsriemen, der über Räder des Antriebsmotors und der Verdichtereinrichtung geführt ist, wobei der Antriebsmotor und die Verdichtereinrichtung zum Spannen des Antriebsriemens relativ zueinander mittels eines Schwenkgelenks um eine Schwenkachse schwenkbar gelagert sind und bei einem Auseinanderschwenken des Antriebsmotors und der Verdichtereinrichtung ein Spreizwinkel zwischen dem Antriebsmotor und der Verdichtereinrichtung vergrößert und der Antriebsriemen gespannt wird.

Die Verdichtereinrichtung und der Antriebsmotor bilden eine Verdichter-Baueinheit. Es ist bekannt, einen durch eine Feder belasteten Stab im Bereich der Spreizöffnung zwischen der Verdichtereinrichtung und dem Antriebsmotor anzuordnen. Für die bekannte Anordnung sind allerdings zahlreiche Einzelteile erforderlich. Zudem ist die Spannwirkung der Feder und damit die Einstellung einer gewünschten Spannung des Antriebsriemens verhältnismäßig schwer einstellbar.

Es ist daher die Aufgabe der vorliegenden Erfindung, eine Kompressorvorrichtung mit einer einfachen, wirkungsvollen Spanneinrichtung bereitzustellen.

Zur Lösung der Aufgabe ist bei einer Kompressorvorrichtung der eingangs genannten Art vorgesehen, dass sie eine Spanneinrichtung mit einer Federanordnung aufweist, die eine Gelenkarmanordnung in Richtung der Schwenkachse im Sinne eines Aufweitens des Spreizwinkels und Spannens des Antriebsriemens beaufschlagt.

Die Gelenkanordnung enthält beispielsweise zwei zueinander schwenkbeweglich gelagerte Gelenkarmanordnungen mit jeweils mindestens einem Gelenkarm, die ihrerseits wiederum an den beiden Komponenten Verdichtereinrichtung und Antriebsmotor schwenkbeweglich gelagert sind. Die Federanordnung spannt die Gelenkarmanordnung beispielsweise im Sinne eines Streckens, so dass der Spreizwinkel vergrößert und die Spannung des Antriebsriemens erhöht wird.

Die Gelenkarmanordnung kann in einem Zwischenraum zwischen dem Antriebsmotor und der Verdichtereinrichtung angeordnet sein. Neben dieser platzsparenden Bauweise ist es auch eine scherenartige Anordnung möglich, bei der die Gelenkarmanordnung in einem Zwischenraum angeordnet ist, der neben dem Zwischenraum zwischen dem Antriebsmotor und der Verdichteranordnung vorgesehen ist.

Die Gelenkarmanordnung enthält vorzugsweise mindestens eine bezüglich des Antriebsmotors und der Verdichtereinrichtung schwenkbeweglich gelagerte Schwenkhebelanordnung. Die mindestens eine Schwenkhebelanordnung enthält beispielsweise die vorgenannten Gelenkarme oder Schwenkhebel, die zueinander schwenkbeweglich sind. Es ist aber auch eine Anordnung prinzipiell denkbar, bei der ein Schwenkhebel einerseits an der Verdichtereinrichtung oder dem Antriebsmotor schwenkbeweglich gelagert ist und bezüglich der jeweils anderen Komponente (Verdichtereinrichtung oder Antriebsmotor) in einer Linearführung beweglich gelagert ist.

Die Gelenkarmanordnung enthält vorzugsweise eine bezüglich des Antriebsmotors mittels einer ersten Schwenkgelenkanordnung schwenkbar gelagerte erste Schwenkhebelanordnung mit mindestens einem Schwenkhebel und eine bezüglich der Verdichtereinrichtung mittels einer zweiten Schwenkgelenkanordnung schwenkbar gelagerte zweite Schenkhebelanordnung mit ebenfalls mindestens einem Schwenkhebel. Diese erste und zweite Schwenkhebelanordnung sind mittels einer dritten Schwenkgelenkanordnung schwenkbeweglich verbunden.

Vorzugsweise werden die Schwenkhebelanordnungen durch die Federeinrichtung derart belastet, dass ein Schwenkwinkel zwischen der ersten und zweiten Schwenkhebelanordnung bei einem Spannen des Antriebswinkels verkleinert wird. Mithin werden die Schwenkhebel relativ zueinander gestreckt.

Wie erläutert, enthalten die Schwenkgelenkanordnungen zweckmäßigerweise mindestens jeweils einen Schwenkhebel. Es ist aber auch vorteilhaft, wenn die erste und/oder die zweite Schwenkgelenkanordnung mindestens zwei oder weitere Schwenkhebel aufweisen, die an einer gemeinsamen Achswelle der ersten Schwenkgelenkanordnung oder der zweiten Schwenkgelenkanordnung schwenkbeweglich gelagert sind. Mehrere Schwenkhebel können z.B. eine höhere mechanische Belastung aufnehmen.

Die erste Schwenkhebelanordnung ist vorzugsweise zwischen Schwenkhebeln der zweiten Schwenkhebelanordnung angeordnet oder umgekehrt. Somit entsteht eine symmetrische Anordnung mit einer gleichmäßigen Belastung. Es kann aber auch eine abwechselnde Anordnung vorgesehen sein, bei der abwechselnd jeweils ein Schwenkhebel der ersten Schwenkhebelanordnung neben einem Schwenkhebel der zweiten Schwenkhebelanordnung angeordnet ist.

Vorzugsweise wirkt die Federanordnung im Bereich einer Schwenkachse der dritten Schwenkgelenkanordnung auf die Gelenkarmanordnung. Es versteht sich, dass die Federanordnung aber auch auf Schwenkhebel der ersten oder zweiten Schwenkhebelanordnung wirken kann, beispielsweise wenn dort entsprechende Kraftangriffspunkte vorgesehen sind, z.B. Ösen zum Einhängen von Federn oder dergleichen.

Die dritte Schwenkgelenkanordnung weist zweckmäßigerweise mindestens zwei zueinander beabstandete Schwenkgelenke auf, die jeweils einen Schwenkhebel der ersten Schwenkhebelanordnung und einen Schwenkhebel der zweiten Schwenkhebelanordnung schwenkgelenkig verbinden. Die Federanordnung ist mit den Schwenkgelenken der dritten Schwenkgelenkanordnung verbunden. Alternativ wäre es auch denkbar, dass beispielsweise eine durchgehende Achswelle der dritten Schwenkgelenkanordnung durch alle Schwenkgelenke der dritten Schwenkgelenkanordnung verläuft.

Die Federanordnung weist vorzugsweise mindestens zwei Zugfedern auf, die mit den Schwenkgelenken der dritten Schwenkgelenkanordnung verbunden sind. Die beiden Zugfedern sind zweckmäßigerweise durch ein Koppelglied miteinander verbunden. Dadurch wird eine gleichmäßige Krafteinleitung auf die Schwenkgelenke bewirkt, die vorzugsweise voneinander beabstandet und miteinander nicht unmittelbar verbunden sind. Das Koppelglied ist vorzugsweise beabstandet zu den Schwenkgelenken.

Die Federanordnung ist zweckmäßigerweise an einer Achswelle eines Schwenkgelenks zum Verändern des Spreizwinkels zwischen dem Antriebsmotor und der Verdichtereinrichtung befestigt. Es versteht sich, dass die Federanordnung auch an einem beliebigen anderen ortsfesten Punkt eines Gestells oder Gehäuses der Kompressorvorrichtung angeordnet sein kann, um in Richtung der Schwenkachse zwischen Antriebsmotor und Verdichtereinrichtung zu wirken.

Vorzugsweise ist eine Einstelleinrichtung zum Einstellen einer Spannung der Federanordnung vorgesehen, mit der die Spannung des Antriebsriemens einstellbar ist.

Die Einstelleinrichtung enthält vorzugsweise mindestens einen Zuganker, an dessen einem Längsendbereich eine Halterung für mindestens eine Feder der Federanordnung und an dessen anderem Längsendbereich ein Verstellelement angeordnet ist. Das Verstellelement ist längsverstellbar mit einem Schwenkgelenk der dritten Schwenkgelenkanordnung verbunden, wobei durch Längsverstellung des Längsverstellelements eine Spannung der mindestens einen Feder einstellbar ist. Es versteht sich, dass aber auch am anderen Längsendbereich, das heißt im Bereich der Schwenkachse zwischen Antriebsmotor und Verdichtereinrichtung, ein Längsverstellelement vorgesehen sein kann.

Der Antriebsmotor ist vorzugsweise an einer Motorhalterung angeordnet, während die Verdichtereinrichtung an einer Verdichterhalterung befestigt ist. Das Schwenkgelenk zum verändern des Spreizwinkels zwischen dem Antriebsmotor und der Verdichtereinrichtung ist an der Motorhalterung und der Verdichtereinrichtung angeordnet. Mithin sind die beiden Halterung schwenkgelenkig miteinander verbunden. Alternativ wäre es denkbar, das Schwenkgelenk unmittelbar beispielsweise an einer Motorfuß und/oder an einem Fuß der Verdichtereinrichtung anzuordnen.

Die vorgenannten Halterungen sind zweckmäßigerweise in der Art von Konsolen ausgestaltet. Es versteht sich, dass aber auch plattenartige Halterungen, Rahmen und dergleichen möglich sind.

Die Verdichtereinrichtung und der Antriebsmotor sind vorzugsweise vertikal übereinander angeordnet, so dass eine Gewichtskraft des Antriebsmotors oder der Verdichtereinrichtung im Sinne eines Aufweitens des Spreizwinkels und Spannen des Antriebsrahmens wirkt. Dies betrifft die jeweils untere Komponente, das heißt entweder die Verdichtereinrichtung oder den Antriebsmotor.

Nachfolgend werden Ausführungsbeispiele der Erfindung anhand der Zeichnung erläutert. Es zeigen:

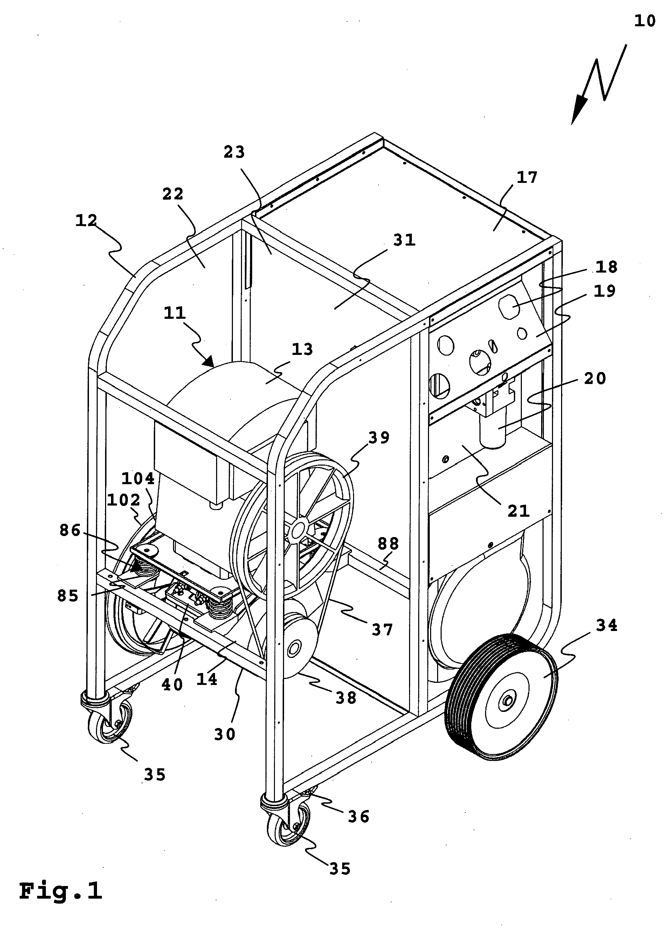

- Figur 1: eine perspektivische Ansicht einer erfindungsgemäßen Kompressorvorrichtung, mit teilweise entferntem Gehäuse schräg von vorn rechts,

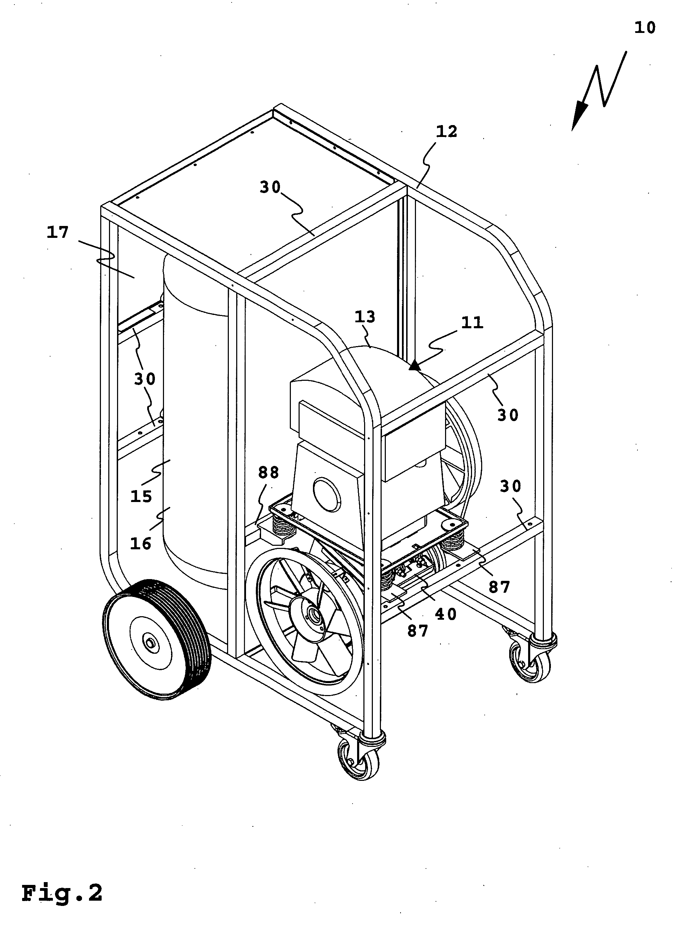

- Figur 2: die Kompressorvorrichtung aus Figur 1 mit vollständigem Gehäuse schräg von vorn links,
- Figur 3: eine Ansicht entsprechend Figur 2 der Kompressorvorrichtung mit geschlossenem Gehäuse,
- Figur 4: eine perspektivische Ansicht der Kompressorvorrichtung mit geschlossenem Gehäuse etwa aus der Perspektive gemäß Figur 1,
- Figur 5: eine Vorderansicht einer Spanneinrichtung der Kompressorvorrichtung gemäß der vorhergehenden Figuren mit einer schematisch angedeuteten Verdichtereinrichtung und einem Antriebsmotor in zwei Spannstellungen,
- Figur 6: eine Verdichter-Baueinheit enthaltend die Spanneinrichtung sowie die Verdichtereinrichtung und den Antriebsmotor schräg von unten,
- Figur 7a: eine perspektivische Schrägansicht von unten der Spanneinrichtung gemäß Figuren 5 und 6,
- Figur 7b: die Spanneinrichtung gemäß Figur 7a schräg von oben,
- Figur 8: ein Lüfterrad in einem Luftführungsmantel und eine Dichtungsanordnung der Verdichter-Baueinheit gemäß Figur 6 von vorn,
- Figur 9: eine geschnittene Seitenansicht des Lüfterrades sowie des Luftführungsmantels und der Dichtungsanordnung etwa einer Linie A-A in Figur 8,
- Figur 10: das Lüfterrad mit Luftführungsmantel und Dichtungsanordnung aus den Figuren 8 und 9 schräg von hinten,
- Figur 11: eine Schraubenfeder einer Schraubenfederanordnung für die Verdichter-Baueinheit der Kompressorvorrichtung mit einem innenliegenden Dämpferelement, und
- Figur 12: eine Schraubenfeder einer Schraubenfederanordnung für die Verdichter-Baueinheit mit einem neben der Schraubenfeder angeordneten Dämpferelement.

Bei einer mobilen Kompressorvorrichtung 10, z.B. einem Werkstattkompressor, ist eine Verdichter-Baueinheit 11 an einem Gestell 12 schwingungsfähig gelagert. Eine Verdichtereinrichtung 13 enthält einen Kolbenverdichter, beispielsweise einen Labyrinth-Kolbenverdichter, einen Hubkolbenverdichter oder dergleichen, der durch einen Antriebsmotor 14 angetrieben wird. Die Verdichtereinrichtung 13 erzeugt Druckluft, die in einem Druckluftspeicher 15 speicherbar ist.

Der Druckluftspeicher 15 enthält beispielsweise einen Vorratsbehälter 16, der senkrecht in einem hinteren Bereich 17 des Gestells 12 angeordnet ist. Außenseitig an dem Bereich 17 sind in der Zeichnung nicht dargestellte Bedienelemente und Anzeigeelemente vorgesehen, beispielsweise Druckanzeigen oder dergleichen, die in Öffnungen 18 eines Bedienbords 19 eingesetzt sind. Im hinteren Bereich 17 sind ferner zweckmäßigerweise unterhalb des Bedienbords 19 Druckluft-Wartungsgeräte 20 vorgesehen, beispielsweise Filter, Öler, Druckminderer oder dergleichen. Die Druckluft-Wartungsgeräte 20 sind zweckmäßigerweise in einer Ausnehmung 21 der Kompressorvorrichtung 10 angeordnet, so dass die Wartungsgeräte 20 zwar geschützt, jedoch leicht zugänglich positioniert sind. Auf diese Weise kann beispielsweise eine Filterpatrone leicht gewechselt werden.

Die Verdichter-Baueinheit 11 ist in einem vorderen Bereich 22 des Gestells angeordnet. Zumindest dieser vordere Bereich 22 ist durch ein Gehäuse 23 gekapselt.

Das Gehäuse 23 enthält Seitenwandteile 24, 25, die an seitlichen Rahmen 26 des Gestells 12 befestigt sind, beispielsweise mit Schrauben. Ferner sind Vorderwandteile 27a, 27b sowie Deckelteile 28 und 29 an vorderen Querstreben 30 des Gestells 12 befestigt. Zwischen dem (Druckluft-)Vorratsbehälter 16 und der Verdichter-Baueinheit 11 ist ferner ein Wandteil 31 am Gestell 12 befestigt. Auch an der Unterseite, das heißt unterhalb der Verdichter-Baueinheit 11, kann vorteilhaft eine in der Zeichnung nicht dargestellte Wandung bzw. ein Bodenteil vorgesehen sein. Dieses Bodenteil kapselt in Zusammenwirkung mit den Seitenwandteilen 24, 25, den Vorderwandteilen 27a, 27b sowie den Deckelteilen 28 die Verdichter-Baueinheit 11, so dass beispielsweise Schallschwingungen und dergleichen gedämpft sind. Beispielsweise sind die vorgenannten Wandteile vorteilhaft mit einer schalldämpfenden Beschichtung versehen.

Die Deckelteile 28 liegen tiefer als das Deckelteil 29, so dass eine Ablegefläche zum Ablegen von Gegenständen gebildet ist, die seitlich von den Seitenwandteilen 24, 25 begrenzt ist. Ferner sind an den Seitenwandteilen 24, 25 Griffausschnitte 32 vorgesehen, so dass Handgriffabschnitte 33 des Gestells 12 bequem umgriffen werden können. Die Handgriffabschnitte 33 sind vorzugsweise am vorderen oberen Eckbereich der Rahmen 26 vorgesehene Rahmenabschnitte.

An sich stellt es schon einen eigenständigen Gedanken dar, dass die Kompressorvorrichtung 10 nichtlenkbare Räder 34 sowie ein Paar lenkbare Räder 35 aufweist. Die lenkbaren Räder 35 sind unterhalb der Handgriffabschnitte 33 an den vorderen unteren Ende des Gestells 12 angeordnet. Durch Ergreifen der Handgriffabschnitte 33 kann die Kompressorvorrichtung 10 leicht manövriert werden. An den Rädern 34 und/oder 35 sind zweckmäßigerweise Feststelleinrichtungen vorgesehen. Beispielsweise sind an den lenkbaren Rädern 35 Feststelleinrichtungen 36 vorhanden, mit denen die Kompressorvorrichtung 10 am Nutzungsort festlegbar ist. Die Feststelleinrichtung 36 wirkt auf die Räder 35. Die lenkbaren Räder 35 haben zweckmäßigerweise einen kleineren Durchmesser als die nichtlenkbaren Räder 34. Dies macht die Kompressorvorrichtung 10 leichter lenkbar. Die Räder 34 stehen seitlich vor das Gestell 12 vor. Die Räder 34 sind zweckmäßigerweise im Bereich des Vorratsbehälters 16 angeordnet.

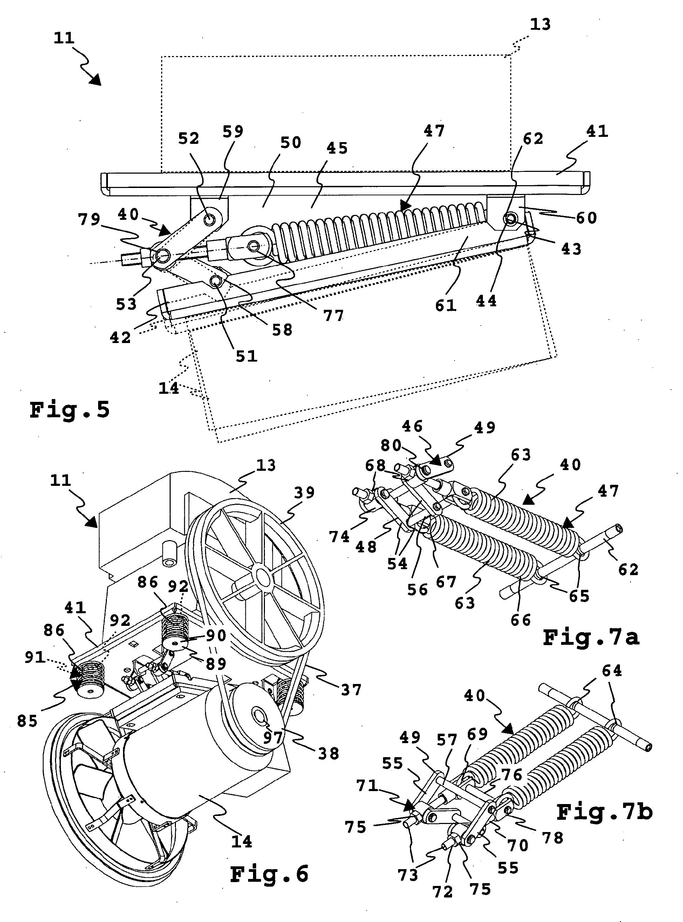

Der Antriebsmotor 14 treibt die Verdichtereinrichtung 13 über einen Antriebsriemen 37 an. Der Antriebsriemen 37 ist über ein Abtriebsrad 38 des Antriebsmotors 14 und ein Antriebsrad 39 der Verdichtereinrichtung 13 geführt. Eine Spannung des Antriebsriemens 37 ist mittels einer Spanneinrichtung 40, die zwischen der Verdichtereinrichtung 13 und dem Antriebsmotor 14 angeordnet ist, einstellbar. Die Verdichtereinrichtung 13 ist oberhalb des Antriebsmotors 14 angeordnet. Die Verdichtereinrichtung 13 und der Antriebsmotor 14, die in Figur 5 schematisch dargestellt sind, sind relativ zueinander schwenkbeweglich. Beispielsweise ist der Antriebsmotor 14 schwenkbeweglich bezüglich der Verdichtereinrichtung 13.

Die Verdichtereinrichtung 13 wird von einer Verdichterhalterung 41 gehalten. Eine Antriebsmotorhalterung 42 ist zum Halten des Antriebsmotors 14 ist schwenkbeweglich mittels eines Schwenkgelenks 43 an der Verdichterhalterung 41 angeordnet. Der Antriebsmotor 14 ist über Kopf an der Antriebsmotorhalterung 42 befestigt. Eine Schwenkachse 44 des Schwenkgelenks 43 verläuft parallel zu den Antriebs- bzw. Abtriebsachsen der Verdichtereinrichtung 13 und des Antriebsmotors 14. Die Schwenkachse 44 verläuft parallel zu den vorgenannten beiden Achsen der Komponenten 13, 14, zweckmäßigerweise in vertikaler Richtung zwischen diesen beiden Achsen, horizontal jedoch daneben.

Wenn der Antriebsmotor 14 um die Schwenkachse 44 nach unten schwenkt (in Figur 5 gestrichelt dargestellt), wirkt dies im Sinne eines Aufweitens des Spreizwinkels und zwischen dem Antriebsmotor 14 und der Verdichtereinrichtung 13. Der Antriebsmotor 14 schwenkt beispielsweise wegen seiner Gewichtskraft nach unten, was im Sinne eines Spannens des Antriebsriemens 37 wirkt. Hinzu kommt die Spannwirkung der Spanneinrichtung 40, die erfindungsgemäß ausgestaltet ist:

In einem Zwischenraum 45 zwischen dem Antriebsmotor 14 und der Verdichtereinrichtung 13 ist eine Gelenkarmanordnung 46 angeordnet. Die Gelenkarmanordnung 46 wird durch eine Federanordnung 47 in Richtung der Schwenkachse 44 beaufschlagt, was ein Spannen des Antriebsriemens 37 bewirkt. Durch die Federbeaufschlagung werden nämlich eine erste, in der Zeichnung untere Schwenkhebelanordnung 48 der Gelenkarmanordnung 46 und eine in der Zeichnung obere zweite Schwenkhebelanordnung 49 im Sinne eines Streckens beaufschlagt, was im Sinne eines Aufweitens eines Spreizwinkels 50 zwischen dem Antriebsmotor 14 und der Verdichtereinrichtung 13 wirkt und den Antriebsriemen 37 spannt.

Die Schwenkhebelanordnungen 48, 49 sind mittels einer ersten Schwenkgelenkanordnung 51 und einer zweiten Schwenkgelenkanordnung 52 bezüglich des Antriebsmotors 14 und der Verdichtereinrichtung 13 schwenkbeweglich. Die Schwenkhebelanordnungen 48, 49 sind mittels einer dritten Schwenkgelenkanordnung 53 ihrerseits wiederum schwenkbeweglich miteinander verbunden. Schwenkhebel 54 der Schwenkhebelanordnung 48 sind zwischen Schwenkhebeln 55 der zweiten Schwenkhebelanordnung 49 angeordnet. Die Schwenkhebel 54 sind durch eine Achswelle 56 miteinander verbunden, die Schwenkhebel 55 durch eine Achswelle 57. Die Achswellen 56, 57 sind an Lagerhalterungen 58, 59 schwenkbar gelagert, die nach oben vor die Antriebsmotorhalterung 42 bzw. nach unten vor die Verdichterhalterung 41 vorstehen. Beispielsweise sind die Schwenkhebel 54, 55 drehfest an den Achswellen 56, 57 befestigt. Aber auch die umgekehrt Konfiguration ist denkbar, dass nämlich die Achswellen 56, 57 fest an den Lagerhalterungen 58, 59 befestigt sind, und die Schwenkhebel 54, 55 um die Achswellen 56, 57 schwenken können. Die Schwenkhebel 54, 55 werden beispielsweise von den Achswellen 56, 57 durchdrungen.

Die Lagerhalterungen 58, 59 sind beispielsweise Laschen, die aus den konsolenartigen Halterungen 41, 42 ausgestanzt und umgebogen sind.

In gleicher Weise ist eine Lagerhalterung 60 des Schwenkgelenks 43 gebildet, nämlich durch aus der Verdichterhalterung 41 ausgestanzte Laschen, die nach unten gebogen sind. Die Lagerhalterungen 60 sowie nach oben vorstehende Abschnitte 61 der Antriebsmotorhalterung 42 werden von einer Achswelle 62 des Schwenkgelenks 43 durchdrungen.

An der Achswelle 62 sind zwei Federn 63, z.B. Zugfedern, der Federanordnung 47 angeordnet. Ein jeweils zu einer Öse umgebogenes Federende 64 der Federn 63 wird von der Achswelle 62 durchdrungen. An der Achswelle 62 sind vorzugsweise Haltemittel vorhanden, die die Federenden 64 an der jeweiligen Axialposition entlang der Achswelle 62 halten, beispielsweise Vorsprünge oder Nuten, z.B. Ringnuten 65, in die die Federenden 64 eingreifen. Dadurch verlaufen die beiden Federn 63 parallel nebeneinander. Die beiden Federenden 64 bilden somit eine Halterung zum Halten an der Achswelle 62.

Während die Federenden 64, die erste Längsendbereiche 66 der Federn 63 bilden, mit dem Schwenkgelenk 43 verbunden sind, sind den Längsendbereichen 66 entgegengesetzte Längsendbereiche 67 der Federn 63 mit Schwenkgelenken 68 der dritten, die Schwenkhebelanordnungen 48, 49 schwenkgelenkig verbindenden Schwenkgelenkanordnung 53 verbunden. Die Längsendbereiche 67 sind ebenfalls als Ösen ausgestaltet und in Halterungen 69 von Zugankern 70 einer Einstelleinrichtung 71 zum Einstellen einer Spannung der Federanordnung 47 und somit des Antriebsriemens 37 eingehängt sind.

An einem dem Längsendbereich mit der Halterungen 69 entgegengesetzten Längsendbereich der Zuganker 70 sind Längsverstellelemente 72 zur Längsverstellung und somit zur Einstellung der Federspannung der Federn 63 vorgesehen. Die Längsverstellelemente 72 enthalten beispielsweise Gewindestäbe 73, die durch Achsstücke 74 der Schwenkgelenke 68 durchgesteckt sind. Auf die Gewindestäbe 73 ist jeweils eine Mutter 75 aufgeschraubt, die sich auf den Achsstücken 74 abstützt. In Abhängigkeit von der Längsposition der Mutter 75 an den Längsverstellelementen 72 ist die Federspannung der beiden Federn 63 der Federanordnung 47 individuell einstellbar. Somit können die beiden Schwenkgelenke 68 gleichmäßig belastet werden.

Die beiden Zugfedern 63 sind durch ein Koppelglied 76 miteinander verbunden. Das Koppelglied 76 verbindet die beiden Zuganker 70 an ihren jeweiligen Halterungen 69. Das Koppelglied 76 wird durch eine Stange 77 gebildet, die durch Gabelhalterungen 78 der Halterungen 69 durchgesteckt ist. Die Längsendbereiche 67 der Federn 63 sind in die Stange 77 zwischen den Gabelenden der Gabelhalterungen 78 eingehängt. Die Stange 77 verläuft parallel zu einer Schwenkachse 79 der Schwenkgelenke 68 der Schwenkgelenkanordnung 53. Durch das Koppelglied 76 wird in Verbindung mit den Ringnuten 65 an der Achswelle 62 ein Parallelabstand zwischen den beiden Federn 63 aufrechterhalten. Somit greifen die beiden Federn 63 verkantungsfrei und gleichmäßig an den Schwenkgelenken 68 an.

Durch entsprechendes Nachjustieren der Muttern 75 ist vorteilhaft eine Feinpositionierung eines Winkels zwischen den beiden Drehachsen des Antriebsmotors 14 und der Verdichtereinrichtung 13 möglich.

Vor die Achsstücke 74 stehen seitliche Achsstummel 80 vor, wobei die außenseitigen Achsstummel 80 die Schwenkhebel 55, die innenseitigen, einander gegenüberliegenden Achsstummel 80 die beiden unteren Schwenkhebel 54 jeweils durchdringen. Die Schwenkhebel 54, 55 sind drehbeweglich an den Achsstummeln 80 gelagert.

Zu einem geräuscharmen und schwingungsarmen Betrieb der Kompressorvorrichtung 10 tragen neben dem schallisolierenden Gehäuse 23 die nachfolgenden Maßnahmen bei:

Die Verdichter-Baueinheit 11 ist mit Hilfe einer Schraubenfederanordnung 85 frei schwingfähig an dem Gestell 12 gelagert. Die Verdichterhalterung 41, an der unten die Antriebsmotorhalterung 42 mit dem Antriebsmotor 14 hängt und auf der die Verdichtereinrichtung 13 montiert ist, lastet auf der Schraubenfederanordnung 85 auf. Weitere Verbindungen neben der Schraubenfederanordnung 85 sind zwischen der Verdichter-Baueinheit 11 und dem Gestell 12 nicht vorhanden. Somit sorgt allein die Schraubenfederanordnung 85 für eine Schwingungsentkopplung der Verdichter-Baueinheit 11 von dem Gestell 12 der Kompressorvorrichtung 10. Dies führt zu einem sehr ruhigen Lauf, so dass die Kompressorvorrichtung 10 leise arbeitet und nicht durch Vibrationen sozusagen wandert, sondern an Ort und Stelle verbleibt. Die Feststelleinrichtungen 36 an den Rädern 35 werden kaum durch Schwingungen der Verdichter-Baueinheit 11 belastet.

Die Schraubenfederanordnung 85 umfasst vier Schraubenfedern 86, die in Eckbereichen der vorliegend rechteckigen Verdichterhalterung 41 angeordnet sind. Die Schraubenfedern 86 sind am Gestell 12 angeordnet, beispielsweise auf Haltevorsprüngen 87. Die Haltevorsprünge 87 stehen beispielsweise vor eine vorderseitig Querstrebe 30 sowie eine dieser Querstrebe 30 gegenüberliegende Querstrebe 88 des Gestells 12 vor. Die Haltevorsprünge 87 sind vorzugsweise Winkelstücke, so dass sie mechanisch belastbar sind.

Die Schraubenfedern 86 sind vorliegend zylindrische Federn. Die Schraubenfedern 86 sind Druckfedern.

Denkbar sind aber auch progressive Schraubenfedern, kegelige Schraubenfedern oder dergleichen. Beispielsweise können Kegelstumpffedern mit einem Kreisquerschnitt oder auch Rechteckquerschnitt eingesetzt werden. Der Vorteil dieser konischen oder kegeligen Schraubenfedern liegt in der guten Raumausnutzung, weil sich die Windungen ineinander schieben lassen. Es ist aber auch möglich, dass solche kegeligen Schraubenfedern eine progressive Federkennlinie aufweisen, das heißt, dass die Dämpfungswirkung mit zunehmender Kompression stärker wird.

An den Enden der Schraubenfedern 86 sind Befestigungselemente 89, beispielsweise Federteller 90 oder Halteplatten 94 vorgesehen. Die Federteller 90 sind beispielsweise mit den Haltevorsprüngen 87 und der Verdichterhalterung 41 verschraubt. Es können dort aber auch beispielsweise Federdome vorgesehen sein, in die die Schraubenfedern 86 eingreifen.

Die Schraubenfederanordnung 85 enthält zweckmäßigerweise eine Dämpferanordnung 91, die Schwingungen der Verdichter-Baueinheit 11 dämpft. Die Dämpferanordnung 91 enthält optional den Schraubenfedern 86 zugeordnete Dämpferelemente 92. Die Dämpferelemente 92 umfassen beispielsweise Dämpferkerne 93, die im Innenraum der Schraubenfedern 86 angeordnet sind. Die Dämpferkerne 93 sind zwischen den Halteplatten 94 angeordnet. Die Dämpferelemente 92 enthalten zweckmäßigerweise einen dämpfenden, dauerelastischen Kunststoff, beispielsweise ein Polyurethan-Elastomer.

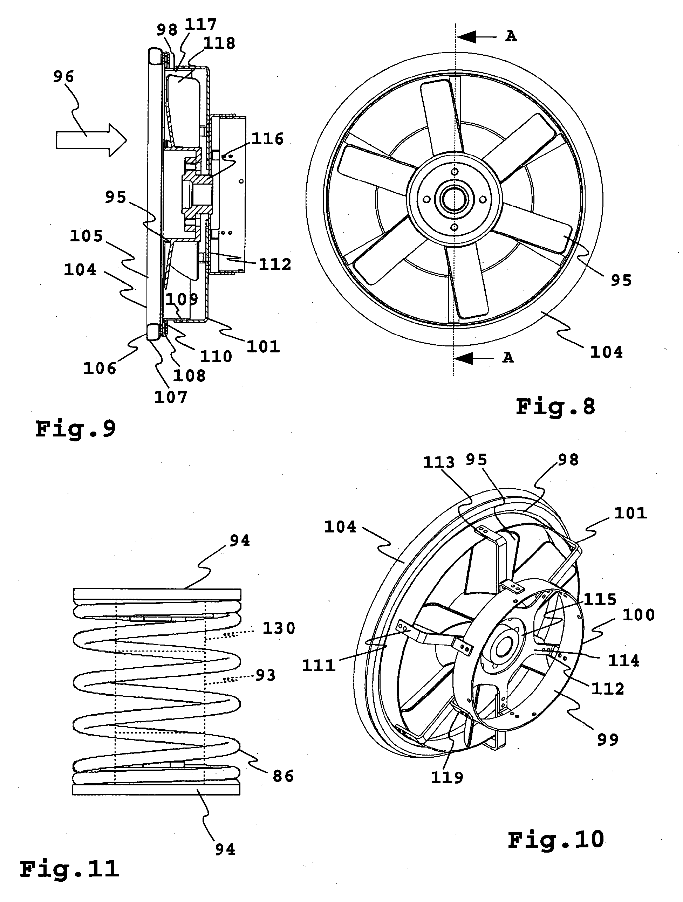

Die Dämpferelemente 92 erstrecken sich, wie Figur 11 dargestellt, vorzugsweise zwischen den Halteplatten 94 und liegen an zumindest einer der Halteplatten 94 an. Wenn die Dämpferelemente 92 oder Dämpferkerne 93 maximal komprimiert sind, wirken sie als Anschlagseinrichtungen 130, z.B. als Endanschläge, die eine maximale Kompression der Schraubenfedern 86 und somit einen Schwingungshub der Schraubenfederanordnung 85 begrenzen.

Es versteht sich, dass auch an anderer Stelle Anschlagseinrichtungen und/oder Dämpferelemente zwischen dem Gestell 12 und der Verdichter-Baueinheit 11, z.B. der Verdichterhalterung 41, vorgesehen sein können.

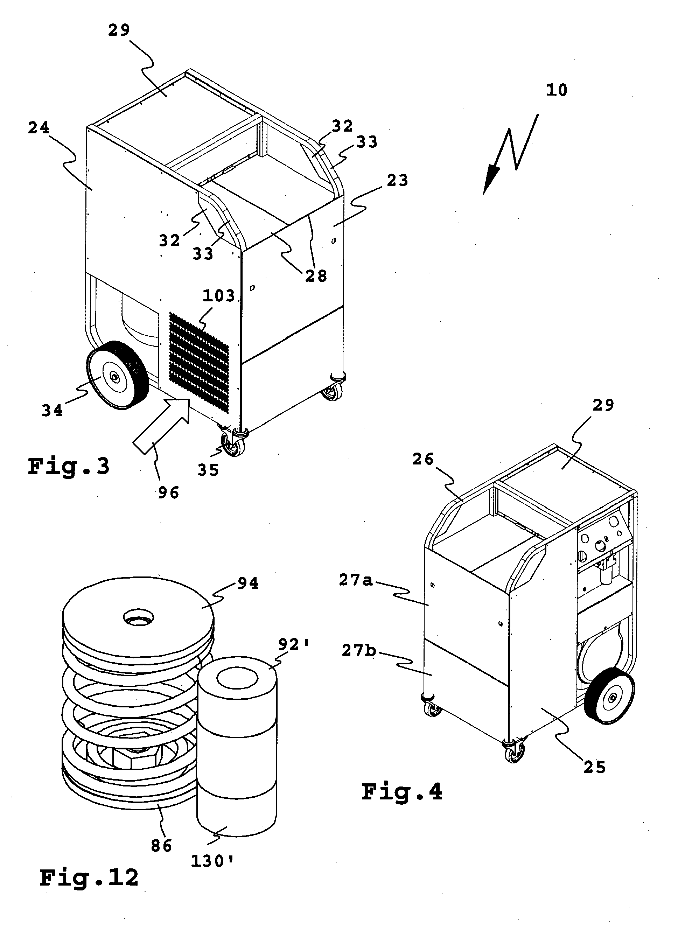

Dämpferelemente und/oder Anschlagseinrichtungen können z.B. prinzipiell auch neben den Schraubenfedern einer erfindungsgemäßen Schraubenfederanordnung angeordnet sein. So kann z.B. kann wie in Figur 12 dargestellt eine durch ein Dämpferelement 92' gebildete Anschlagseinrichtung 130' neben einer Schraubenfeder 86 positioniert sein. Das Dämpferelement 92' enthält zweckmäßigerweise einen dämpfenden, dauerelastischen Kunststoff.

Als Anschlagseinrichtung kann auch ein feststehender, unkompressibler Anschlag zwischen dem Gestell 12 und der Verdichterhalterung 41 vorgesehen sein.

Die Verdichter-Baueinheit 11 ist schwingungsentkoppelt von dem Gestell 12. Das Kühlkonzept der Kompressorvorrichtung 10 ist an diese freischwingende Eigenschaft angepasst, wobei die Kühlung der Verdichtereinrichtung 13 sehr effizient arbeitet:

Der Antriebsmotor 14 treibt ein Lüfterrad 95 zum Erzeugen eines Kühlluftstroms 96 an. Das Lüfterrad 95 ist an einer der Stirnseite mit dem Abtriebsrad 38 entgegengesetzten Stirnseite des Antriebsmotors 14 angeordnet. Das Lüfterrad 95 dreht sich in einem Luftführungsmantel 98, der statisch mit der Verdichter-Baueinheit 11 verbunden ist. Somit ist ein Abstand 117 zwischen Flügeln 118 des Lüfterrads 95 und dem Luftführungsmantel 98 stets konstant und verhältnismäßig eng, was die Luftförderleistung des Lüfterrades 95 erhöht, da der Luftführungsmantel 98 mit der gesamten Verdichter-Baueinheit 11 schwingt und somit keine Toleranz für den Abstand 117 vorhanden sein muss.

Der Luftführungsmantel 98, der beispielsweise durch ein zylindrisches Blechstück oder Kunststoffstück gebildet ist, wird von einer Halterung 99 gehalten. Die Halterung 99 ist am Antriebsmotor 14 befestigt. Die Halterung 99 enthält einen Haltering 100, der auf das Gehäuse des Antriebsmotors 14 formschlüssig aufgesteckt ist. Zweckmäßigerweise ist der Haltering 100 mit an das Gehäuse des Antriebsmotors 14 angeschraubt, mit diesem verklebt oder in sonstiger Weise verbunden.

Vor den Haltering 100 stehen Haltearme 101 vor, die den ringförmigen Luftführungsmantel 98 halten.

Der Kühlluftstrom 96 strömt durch eine Luftdurchlassöffnung 102 in das Gehäuse 23 ein. Die Luftdurchlassöffnung 102 ist dem Lüfterrad 95 gegenüberliegend an dem Seitenwandteil 24 vorgesehen. Die Luftdurchlassöffnung 102 ist ringförmig. Vor der Luftdurchlassöffnung 102 ist ein Gitter 103 mit im Wesentlichen quadratischer Außenkontur positioniert.

Der Luftführungsmantel 98 ist strömungsdicht mit der Luftdurchlassöffnung 102 verbunden. Zwischen dem Luftführungsmantel 98 und dem Seitenwandteil 24 ist im Bereich der Luftdurchlassöffnung 102 eine Dichtungsanordnung 104 angeordnet. Eine flexible Ringdichtung 105 liegt an dem Seitenwandteil 24 an und umgibt ringförmig die Luftdurchlassöffnung 102. Somit strömt keine Fehlluft durch die Luftdurchlassöffnung 102 hindurch und an dem Luftführungsmantel 98 vorbei.

Obwohl der Abstand 117 zwischen Flügeln 118 des Lüfterrads 95 und dem Luftführungsmantel 98 stets konstant und verhältnismäßig eng ist, was die Luftförderleistung des Lüfterrades 95 erhöht, ist auch eine Beweglichkeit der Verdichter-Baueinheit 11 zu dem Gehäuse 25 bei zugleich dichtem Anschluss des Luftführungsmantels 98 an die Luftdurchlassöffnung 102 vorhanden. Dies ermöglicht z.B. Schwingungen der Verdichter-Baueinheit 11 beim Betrieb und/oder eine Positionsänderung des Antriebsmotors 14, z.B. beim Spannen des Antriebsriemens 37.

Ein Durchlassquerschnitt der Dichtungsanordnung 104 ist größer als der Durchlassquerschnitt der Luftdurchlassöffnung 102.

Die Ringdichtung 105 umfasst ein Dichtprofil 106 in der Art beispielsweise einer Fahrzeugtürendichtung oder dergleichen. Das Dichtprofil 106 hat einen zwischen dem Seitenwandteil 24 und dem Luftführungsmantel 98 angeordneten Dichtungswulst 107. Der Dichtungswulst 107 ist elastisch und enthält einen Luftraum sowie eine stirnseitige Flachseite, sodass der Dichtungswulst 107 stets dicht an dem Seitenwandteil 24 anliegt.

Ein Klemmabschnitt 108 neben dem Dichtungswulst 107 ist auf einen stirnseitigen, nach radial außen vor einen Zylinderabschnitt 109 des Luftführungsmantels 98 vorstehenden Ringabschnitt 110 aufgesteckt. Der Ringabschnitt 110 wird beispielsweise durch ein Ringblech gebildet, das an einem den Zylinderabschnitt 109 bildenden Ringblech befestigt ist, beispielsweise angeschweißt oder angeklebt ist.

Die Kompressorvorrichtung 10 ist wartungsfreundlich. Die Verdichter-Baueinheit 11 kann beispielsweise als Ganzes relativ im Gehäuse 23 bewegt werden, da keine feste Kopplung beispielsweise zwischen der Dichtungsanordnung 104 und dem Gehäuse 23 vorhanden ist, sondern lediglich eine flächige Anlage, wenn die Verdichter-Baueinheit 11 in dem Gehäuse 23 positioniert ist. Das Lüfterrad 95 kann im Luftführungsmantel 98 bleiben, wenn z.B. die Verdichter-Baueinheit 11 aus dem Gestell 12 entfernt wird.

Zur Montagefreundlichkeit trägt auch eine zweiteilige Konstruktion der Haltearme 101 bei. Radial zur Drehachse des Lüfterrads 95 verlaufende Schenkel von Winkelstücken 111 sind nämlich von vorn, d.h. durch die Flügel des Lüfterrades 95 hindurch an Armabschnitte 112 angeschraubt, die radial sternförmig verlaufen. Parallel zur Drehachse des Lüfterrads 95 verlaufende Schenkel 113 halten den Luftführungsmantel 98. Die Armabschnitte 112 erstrecken sich strahlenförmig oder sternförmig von einem inneren Haltering 114, der eine Durchtrittsöffnung 115 für die Abtriebswelle 97 bzw. eine Nabe 116 des Lüfterrades 95.

Vordere abgewinkelte Endbereiche 119 der Armabschnitte 112 sind an dem Haltering 100 befestigt, z.B. angeschraubt. Die Endbereiche 119 liegen an einem Außenumfang des Halterings 100 an.

## Patentansprüche

1. Kompressorvorrichtung zur Erzeugung von Druckluft für Druckluft-Werkzeuge, mit einer Verdichtereinrichtung (13) zum Verdichten der Druckluft und mit einem Antriebsmotor (14) zum Antreiben der Verdichtereinrichtung (13) über einen Antriebsriemen (37), der über Räder (38, 39) des Antriebsmotors (14) und der Verdichtereinrichtung (13) geführt ist, wobei der Antriebsmotor (14) und die Verdichtereinrichtung (13) zum Spannen des Antriebsriemens (37) relativ zueinander mittels eines Schwenkgelenks (43) um eine Schwenkachse (44) schwenkbar gelagert sind und bei einem Auseinanderschwenken des Antriebsmotors (14) und der Verdichtereinrichtung (13) ein Spreizwinkel (50) zwischen dem Antriebsmotor (14) und der Verdichtereinrichtung (13) vergrößert und der Antriebsriemen (37) gespannt wird, **dadurch gekennzeichnet, dass** sie eine Spanneinrichtung (40) mit einer Federanordnung (47) aufweist, die eine Gelenkarmanordnung (46) in Richtung der Schwenkachse (44) im Sinne eines Aufweitens des Spreizwinkels (50) und Spannens des Antriebsriemens (37) beaufschlagt.

2. Kompressorvorrichtung nach Anspruch 1, **dadurch gekennzeichnet, dass** die Gelenkarmanordnung (46) in einem Zwischenraum (45) zwischen dem Antriebsmotor (14) und der Verdichtereinrichtung (13) angeordnet ist.

3. Kompressorvorrichtung nach Anspruch 1 oder 2, **dadurch gekennzeichnet, dass** die Gelenkarmanordnung (46) mindestens eine bezüglich des Antriebsmotors (14) und der Verdichtereinrichtung (13) schwenkbeweglich gelagerte Schwenkhebelanordnung (48, 49) aufweist.

4. Kompressorvorrichtung nach Anspruch 3, **dadurch gekennzeichnet, dass** die Gelenkarmanordnung (46) eine bezüglich des Antriebsmotors (14) mittels einer ersten Schwenkgelenkanordnung (51) schwenkbar gelagerte erste Schwenkhebelanordnung (48) und eine bezüglich der Verdichtereinrichtung (13) mittels einer zweiten Schwenkgelenkanordnung (52) schwenkbar gelagerte zweite Schwenkhebelanordnung (49) aufweist, und dass die erste und die zweite Schwenkhebelanordnung (48, 49) mittels einer dritten Schwenkgelenkanordnung (53) schwenkbeweglich verbunden sind.

5. Kompressorvorrichtung nach Anspruch 4, **dadurch gekennzeichnet, dass** die erste Schwenkhebelanordnung (48) mindestens zwei Schwenkhebel (54) aufweist, die an einer gemeinsamen Achswelle der ersten Schwenkgelenkanordnung (51) schwenkbeweglich gelagert sind und/oder die zweite Schwenkhebelanordnung (49) mindestens zwei Schwenkhebel (55) aufweist, die an einer gemeinsamen Achswelle der zweiten Schwenkgelenkanordnung (52) schwenkbeweglich gelagert sind und/oder dass die erste Schwenkhebelanordnung (48) zwischen Schwenkhebeln (55) der zweiten Schwenkhebelanordnung (49) angeordnet sind oder die zweite Schwenkhebelanordnung (49) (49) zwischen Schwenkhebeln (54) der ersten Schwenkhebelanordnung (48) angeordnet sind.

6. Kompressorvorrichtung nach einem der Ansprüche 4 oder 5, **dadurch gekennzeichnet, dass** die Federanordnung (47) im Bereich einer Schwenkachse der dritten Schwenkgelenkanordnung (53) auf die Gelenkarmanordnung (46) wirkt.

7. Kompressorvorrichtung nach einem der Ansprüche 4 bis 6, **dadurch gekennzeichnet, dass** die dritte Schwenkgelenkanordnung mindestens zwei zueinander beabstandete Schwenkgelenke (68) aufweist, die jeweils einen Schwenkhebel (54) der ersten Schwenkhebelanordnung (48) und einen Schwenkhebel (55) der zweiten Schwenkhebelanordnung (49) schwenkgelenkig verbinden, und dass die Federanordnung (47) mit den Schwenkgelenken (68) der dritten Schwenkgelenkanordnung (53) verbunden ist.

8. Kompressorvorrichtung nach einem der Ansprüche 4 bis 7, **dadurch gekennzeichnet, dass** die Federanordnung (47) mindestens zwei Zugfedern (63) aufweist, die mit der dritten Schwenkgelenkanordnung (53) verbunden sind, und dass die mindestens zwei Zugfedern (63) durch ein Koppelglied (76) miteinander verbunden sind.

9. Kompressorvorrichtung nach einem der vorhergehenden Ansprüche, **dadurch gekennzeichnet, dass** die Federanordnung (47) an einer Achswelle (62) des Schwenkgelenks (43) zum Verändern des Spreizwinkels (50) zwischen dem Antriebsmotor (14) und der Verdichtereinrichtung (13) befestigt ist.

10. Kompressorvorrichtung nach einem der vorhergehenden Ansprüche, **dadurch gekennzeichnet, dass** sie eine Einstelleinrichtung (71) zum Einstellen einer Spannung der Federanordnung (47) aufweist, so dass die Spannung des Antriebsriemens (37) einstellbar ist.

11. Kompressorvorrichtung nach Anspruch 10, **dadurch gekennzeichnet, dass** die Einstelleinrichtung (71) mindestens einen Zuganker (70) aufweist, an dessen einem Längsendbereich eine Halterung (69) für mindestens eine Feder (63) der Federanordnung (47) und an dessen anderem Längsendbereich ein Längsverstellelement (72) angeordnet sind, und dass das Längsverstellelement (72) längsverstellbar mit einem Schwenkgelenk (68) der dritten Schwenkgelenkanordnung (53) verbunden ist, wobei durch Längsverstellung des Längsverstellelements (72) eine Spannung der mindestens einen Feder (63) einstellbar ist.

12. Kompressorvorrichtung nach einem der vorhergehenden Ansprüche, **dadurch gekennzeichnet, dass** der Antriebsmotor (14) an einer Antriebsmotorhalterung (42) angeordnet ist und die Verdichtereinrichtung (13) an einer Verdichterhalterung (41) angeordnet ist, und dass das Schwenkgelenk (43) zum Verändern des Spreizwinkels (50) zwischen dem Antriebsmotor (14) und der Verdichtereinrichtung (13) an der Antriebsmotorhalterung (42) und der Verdichterhalterung (41) angeordnet ist, wobei die Verdichterhalterung (41) und/oder die Antriebsmotorhalterung (42) vorzugsweise als eine Konsole ausgestaltet sind.

13. Kompressorvorrichtung nach einem der vorhergehenden Ansprüche, **dadurch gekennzeichnet, dass** die Verdichtereinrichtung (13) und der Antriebsmotor (14) vertikal übereinander angeordnet sind, so dass eine Gewichtskraft des Antriebsmotors (14) oder der Verdichtereinrichtung (13) im Sinne eines Aufweitens des Spreizwinkels (50) und Spannens des Antriebsriemens (37) wirkt.

14. Kompressorvorrichtung nach einem der vorhergehenden Ansprüche, **dadurch gekennzeichnet, dass** sie ein in einem Luftführungsmantel (98) angeordnetes Lüfterrad (95) zum Erzeugen eines eine Luftdurchlassöffnung (102) eines Gehäuses (23) durchströmenden und die Verdichtereinrichtung (13) kühlenden Kühlluftstroms (96) aufweist, dass das Lüfterrad (95) und der Luftführungsmantel (98) an einer die Verdichtereinrichtung (13) enthaltenden und relativ zu dem Gehäuse (23) beweglichen, insbesondere beim Betrieb des Kompressors schwingenden, Verdichter-Baueinheit (11) angeordnet sind, und dass sie eine zwischen dem Luftführungsmantel (98) und dem Gehäuse (23) mit der Luftdurchlassöffnung (102) angeordnete, einen Außenumfang der Luftdurchlassöffnung (102) umschließende Dichtungsanordnung (104) zum strömungsdichten Anschluss des Luftführungsmantels (98) an die Luftdurchlassöffnung (102) aufweist.

15. Kompressorvorrichtung nach einem der vorhergehenden Ansprüche, **dadurch gekennzeichnet, dass** die Verdichtereinrichtung (13) einen Bestandteil einer Verdichter-Baueinheit (11) bildet, die bezüglich eines Gestells (12) der Kompressorvorrichtung (10) schwingfähig gelagert ist, und dass zwischen dem Gestell (12) und der Verdichter-Baueinheit (11) eine Schraubenfederanordnung (85) mit mehreren Schraubenfedern (86) angeordnet ist, wobei die Kompressorvorrichtung insbesondere eine Dämpferanordnung (91) zur Schwingungsdämpfung Verdichter-Baueinheit (11) bezüglich des Gestells (12) aufweist.
